# EUROPEAN PATENT SPECIFICATION

(11) **EP 0 882 296 B1**
(45) Date of publication and mention of the grant of the patent: **28.04.2004**
(21) Application number: 97905547.2
(22) Date of filing: 21.02.1997
(51) Int. Cl.: G21C 3/20, G21C 3/07

(54) **A COMPONENT DESIGNED FOR USE IN A LIGHT WATER NUCLEAR REACTOR, AND A METHOD FOR THE MANUFACTURE OF SUCH A COMPONENT**
EIN FUR DIE VERWENDUNG IN EINEM LEICHTWASSERKERNREAKTOR ENTWORFENER BAUTEIL UND VERFAHREN ZU SEINER HERSTELLUNG
COMPOSANT CONCU POUR UNE UTILISATION DANS UN REACTEUR NUCLEAIRE A EAU LEGERE ET SON PROCEDE DE FABRICATION

(30) Priority: 23.02.1996 SE 9600700
(43) Date of publication of application: 09.12.1998
(73) Proprietor: Westinghouse Atom AB, 721 63 Västeras (SE)
(72) Inventor: HALLSTADIUS, Lars, S-724 81 Västeras (SE); RUDLING, Peter, S-724 60 Västeras (SE); VESTERLUND, Gunnar, S-722 23 Västeras (SE)
(74) Representative: Israelsson, Stefan
(86) International application number: PCT/SE1997/000298
(87) International publication number: WO 1997/031377

(56) References cited:
- EP-A- 0 533 073
- EP-A- 0 614 195
- WO-A-93/18520
- SE-B- 451 415
- US-A- 5 026 517
- US-A- 5 434 897

## Description

### THE FIELD OF THE INVENTION AND PRIOR ART

The present invention relates to a component designed for use in a light water reactor and at least partly comprised by a metal and/or a metal alloy with at least one surface that presents a coating, and a method of creating a coating resistant to hydration on at least one surface of a component which is designed for use in a light water reactor and which is partly comprised by a metal and/or metal alloy by subjecting the component to a treatment with a gas mixture while heating.

Components in nuclear plants are often subjected to attacks caused by hydration, oxidation and/or wear, and it is often necessary to deposit a coating onto the surface of the components in order to protect the latter. Cladding tubes for nuclear fuel form an example of such components. In the worst scenario, attacks on a cladding tube for nuclear fuel result in a damage extending through the total thickness of the cladding tube in such a way that the radioactive nuclear fuel inside the cladding tube leaks out to the surrounding. This may be caused by primary as well as secondary damages on the cladding tube.

Primary damages are created by attacks on the outer surface of the cladding tube, said attacks being caused by oxidation, due to the contact between the cladding tube and the cooling water, or due to wear. A primary damage extending through the total thickness of the cladding tube implies that water, water steam or a combination thereof flows through the damage, so that a space between the fuel and the inner surface of the cladding tube is filled by the water, water steam or the combination thereof. The presence of the water, water steam or the combination thereof in this space implies that the cladding tube runs the risk of being damaged by attacks from inside the tube. This attack often takes place through hydration. Such a damage is called a secondary damage and can only occur when a primary damage already has occurred. Secondary damages extending through the total thickness of the cladding tube result in a leakage of the nuclear fuel inside the cladding tube, and thereby of radioactivity, to the surrounding. Secondary damages can occur at relatively long distances from the primary damage and, therefore, often have the shape of long cracks, which make them a serious type of damage.

A lot of work has been done to develop a coating on such a cladding tube in order to make the coating more resistant to hydration, oxidation and/or wear and thereby able to prevent damages at the cladding tube. Particularly, it has been difficult to produce coatings at the inside of the cladding tube, said coatings resulting in a good protection against secondary damages. There, a coating which is particularly resistant to hydration is required.

In order to test the resistance to hydration and oxidation of a coating on a cladding tube a method is normally used where the cladding tube is autoclaved by conditions similar to the ones that the cladding tube is subjected to during use thereof in a nuclear plant, whereafter the presence of hydration and oxidation respectively by the coating and the cladding tube is examined. The autoclaving of the cladding tube by this method is not to be confused with an autoclaving that may be used for creating protective coatings on cladding tubes. The latter type of autoclaving will be described more in detail later in this text.

Until the seventies contents of hydrogen in the shape of water in uranium dioxide in fuel pellets resulted in the cladding tube being subjected to hydration at its inside. These damages are called blisters and differ from secondary damages, even though both of them are caused by hydration at the inside of cladding tubes. These days, the uranium is substantially free from hydrogen, and thereby, the problem with blisters has disappeared.

During the sixties and seventies a coating was produced in a cladding tube for nuclear fuel by autoclaving the cladding tube in substantially saturated water steam at a temperature of approximately 425° C and at a pressure of from 0,1 to 0,5 MPa for 24 hours. The result thereby was a coating comprised by zirconium dioxide (ZrO₂), which normally had at thickness of from 0,5 to 1 µm. This coating had a relatively low resistance against hydration and therefore it had no substantially protective effect with regard to secondary damages on the cladding tube.

The patent document DE-A-2 429 447 discloses a cladding tube made of zirconium or niobium alloy with a coating comprised by an oxide layer arranged at an inner surface as well as an outer surface of the cladding tube.

US-A-5026517 discloses that surfaces of metallic components of a nuclear power plant can be provided with a protective coating of TiC, TiN, ZrN, CrC, TiAlVN, TaN, ZrC or WC.

During the eighties a liner layer preferably made of zirconium was applied to the inside of the cladding tube for protection against stress corrosion caused by iodine formed in the uranium dioxide during the fission.

JP-A-63 179 286 discloses the features of the preamble of claim 1.

The inventors have experienced that the coating according to JP-A-63 179 286, in comparison with a coating produced by means of autoclaving in the presence of substantially 100% water steam according to the above technique from the sixties and seventies, results in an improved protection against H₂-absorption, but that it does not provide a sufficient barrier against H₂-permeation to prevent secondary damages on the cladding tube.

By methods of producing a coating on a surface, where the methods are performed by autoclaving the component under pressure, the reaction speed between active constituents in the gas and the material in the surface of the component is regulated by, amongst others, varying the pressure. This is a very bad way of regulating the reaction speed, and relatively small pressure variations during the course of the treatment may cause large variations with regard to the reaction speed, which in its turn might lead to the appearance of defects in the coating. Autoclaving according to prior art is therefore performed at a constant pressure, that is at static conditions.

By a production of a cladding tube designed for use in a light water reactor a series of annealings of the uncoated cladding tube is performed in order to provide good mechanical properties to the latter. By employment of methods according to prior art the cladding tube is then moved to a special final annealing plant which permits treatment under pressure action, for execution of a final annealing and, thereby, a production of a coating. Of economical reasons it is not acceptable to execute the annealings of the cladding tube for obtaining good mechanical properties in a plant which makes pressure treatment possible, as these annealings do not require the use of pressure. Therefore, the final annealing, and thereby the production of the coating, constitutes one step in the total treatment of the cladding tube, said step being separated from previous treatment steps.

Accordingly, prior art does not offer any coating at the inside of a cladding tube for fuel in a light water reactor, said coating providing an effective protection against H₂-permeation, such that secondary damages may be prevented. Moreover, by methods of prior art, the reaction speed is controlled in an unsatisfying way. Furthermore, prior art requires the use of a particular plant that permits pressure treatment.

### SUMMARY OF THE INVENTION

The object of the present invention is to remedy the above problems, and more precisely to provide a component which is designed for use in a light water reactor and which has surfaces with a coating that reduces the risk for damages on the component, particularly the risk for secondary damages, and a method of producing such a component.

This object is obtained by means of the component according to claim 1. The ability of the coating to protect the underlying component against hydration depends upon the resistance of the coating against hydration and of how well it covers the surface of the underlying component. The resistance of the coating against hydration is, in its turn, depending on the structure, the composition and the thickness of the coating. Nitride and oxide compounds fulfil these requirements and, therefore, they are usable as a material of the coating, provided that it is of a sufficient thickness to be resistant against hydration.

According to one embodiment of the invention the coating has a thickness of at most 25 µm. Within this thickness range a coating which has a good resistance against hydration is obtained. By coatings with a thickness smaller than 1 µm an inferior resistance against hydration is obtained, and by coatings with a thickness larger than 25 µm the risk of scaling of the coating from the surface of the component is significant. As scaling implies that significant defects occur in the coating and that the surface of the component becomes unprotected at these defects it is very important to avoid a coating that runs the risk of scaling. According to one application of the embodiment, the coating has a thickness of at least 3 µm. A thickness of 3 µm implies that the coating has a better resistance against hydration in comparison with a coating with a thickness of 1 µm.

According to the invention the component comprises an inner space, and the coating is deposited onto at least one surface in the inner space of the component. Several components in light water reactors, for example tubes, comprise an inner space, and it is often required to protect the surface of this inner space.

According to another embodiment of the invention at least one of the surfaces of the component is comprised by zirconium or a zirconium alloy and the coating comprises at least one of zirconium dioxide (ZrO₂) and zirconium nitride (ZrN). Several components in light water reactors are made of zirconium or a zirconium alloy as these materials have properties suitable for the purpose. However, the materials have a too insignificant resistance to hydration, oxidation, corrosion or wear to be used as uncoated in light water reactors. Therefore, a coating presenting good such properties is often provided on the surface of the component.

Preferably, the coating has such properties that oxidation of the component is generally prevented. Such a coating accordingly constitutes a protection against hydration as well as oxidation of the component, which is desirable as the component often is subjected to attacks by hydration as well as oxidation.

Preferably, the coating has such properties that a wear of the component is substantially prevented. This is desirable as the component is often subjected to a combination of hydration and wear or hydration, oxidation and wear.

According to another embodiment of the invention the cladding tube presents a liner layer on the surface of the inner space, and the coating is located upon this liner layer.

According to another embodiment of the invention, the coating on the cladding tube has such a high resistance against hydration that the risk of having secondary damages on the cladding tube is substantially eliminated.

The provision of the coating defined above is obtained by means of the method according to claim 7. It is a significant advantage that the treatment may be performed at atmospheric pressure and, thus, do not require an equipment for providing a pressure treatment. Therefore, the treatment at atmospheric pressure implies a saving of both time and money.

According to one embodiment of the method of the invention the coating is produced by making at least one of oxygen, nitrogen, an active gas containing oxygen and an active gas containing nitrogen react with at least one material located in the surface of the component. According to one application of the embodiment the coating is comprised by at least one of an oxide or a nitride of at least one material located in the surface of the component. Such oxides and nitrides normally have a good resistance against hydration, oxidation and wear and the coating therefore provides a good protection for the component against this.

According to another embodiment of the method of the invention the treatment is controlled by adding one or more inert gases suitable in this context. These gases dilute the active gases in such a way that favourable reaction conditions are obtained. The addition of the inert gas or gases results in a reduced reaction speed between the gas and the surface material. If the reaction speed is too high the obtained coating will be full of defects and will not therefore constitute a good protection for the component. If, on the other hand, the reaction speed is too low a coating generally free from defects is obtained, but it takes a lot of time to produce this coating. By controlling the reaction speed at a suitable level it is possible to obtain a coating general free from defects within a reasonable period of time .This embodiment of the method of the invention provides an effective way of precisely regulating the reaction speed between active constituents in the gas and the surface of the component. By the method according to this embodiment of the present invention it is possible to vary the addition of the inert gas or gases during the time of the treatment, thereby varying the reaction speed. By the method according to the present invention the treatment is thus performed under dynamic conditions, as a difference to autoclaving according to prior art which, as described earlier, is performed under static conditions. According to one application of the method according to this embodiment the inert gases advantageously comprise at least one of the noble gases argon, helium and neon.

According to another embodiment of the method of the invention the treatment is controlled by varying the amount of water steam in the gas mixture. Different surface materials require different amounts of water steam in the gas mixture in order to produce a coating on the component, through a reaction between active constituents in the gas mixture and in the material of the surface of the component, said coating being sufficiently thick for its purpose. According to one application of the embodiment the gas mixture comprises at least 10% water steam. The inventors have experienced that this a minimum level of water steam required to accomplish coatings with suitable properties.

According to another embodiment of the invention the treatment is performed at such a temperature that an oxidation and a nitration respectively takes place, preferably at a temperature of at least 450°C and at most 650°C.

According to one application of the method of the invention the gas mixture contains air. Air contains both oxygen and nitrogen in an easily accessible state and is also a cheap alternative which is perfect to use by the method of the invention.

According to another application of the method of the invention the gas mixture is free from nitrogen or active nitrogen compounds. This implies that the created coating definitely is comprised by oxides free from contaminations of nitrides or other nitrogen compounds.

According to another application of the method of the invention the gas mixture comprises carbon dioxide (CO₂). According to another application of the embodiment the gas mixture comprises a mixture of carbon monoxide (CO) and carbon dioxide (CO₂). These mixtures are added in order to control the oxidation potential.

According to another application of the method of the invention the gas mixture comprises dinitrogen oxide (N₂O). Also oxygen and argon may exist together with the dinitrogen oxide in the mixture.

According to one application of the method of the invention the treatment is performed for a period of time of 1 to 10 hours.

According to one application of the method of the invention the surface or the surfaces of the component treated comprise zirconium or a zirconium alloy.

According to another application of the method of the invention the coating produced on the surface or surfaces of the component by the treatment comprises at least one of zirconium dioxide (ZrO₂) and zirconium nitride (ZrN).

According to the method of the invention the treatment is performed by depositing the coating on at least a surface of an inner space of the component.

According to another application of the method of the invention the component treated is a cladding tube for nuclear fuel.

According to another application of the method of the invention the cladding tube is annealed a plurality of times in order to provide mechanical strength, and the treatment mentioned earlier represents a final annealing executed in the same plant as these annealings. During use of the method of the invention no move of the cladding tube to a special final annealing plant is thus required, as the final annealing, and thereby the production of the coating, is performed at atmospheric pressure. The final annealing may therefore be accomplished in the plant where the annealing to obtain a good mechanical strength is performed, and thereby provide an integrated part of the total annealing. The production of the coating accomplished in accordance with the method of the invention thus saves both time and money, compared with if the method according to prior art had been employed instead.

### BRIEF DESCRIPTION OF THE DRAWINGS

The present invention will now be described more in detail with reference to the embodiments shown on the attached drawings.
- Fig 1: shows a schematic sectional view of a part of a cladding tube comprising surfaces which present a coating according to the invention.
- Fig 2: shows a schematic sectional view of a part of a cladding tube comprising surfaces that are uncoated.

### DETAILED DESCRIPTION OF EMBODIMENTS

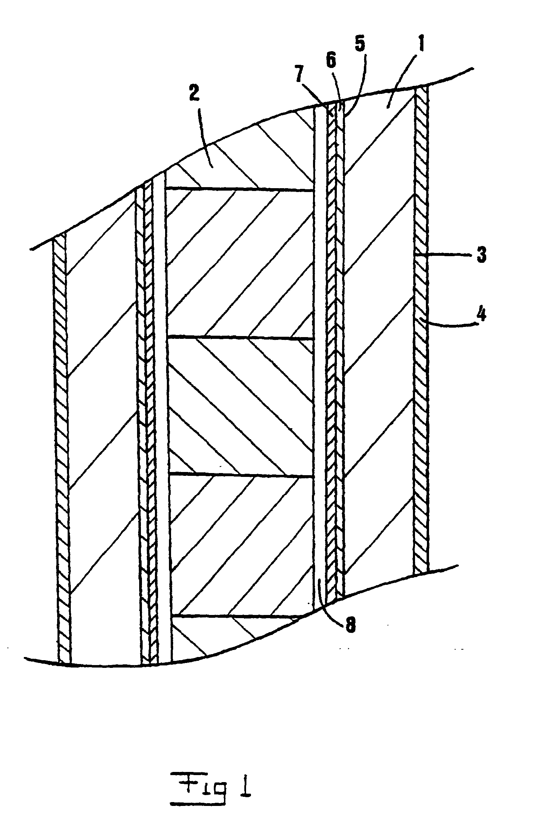

In Fig 1 a part of a cladding tube 1 is shown, said tube being arranged in a light water reactor and nuclear fuel being provided therein as fuel pellets 2. On its outer surface 3 the cladding tube 1 presents a coating 4 according to the invention. The cladding tube 1 also presents a liner layer 6 on its inner surface 5, on which layer a coating 7 according to the invention is provided. The coating 7 may be deposited by means of CVD-technique. By use in a light water reactor the coating 4 on the outer surface 3 of the cladding tube 1 is in contact with a primary cooling circuit that comprises water, water steam or a combination thereof. The coating 4 on the outer surface 3 of the cladding tube 1 has as its task to protect the outer surface 3 of the cladding tube against attacks, preferably caused by oxidation, due to the presence of the water, water steam or the combination thereof, or wear due to the contact with other components in the light water reactor. The coating 4 thus presents a good resistance against oxidation and wear. If, despite this, the coating 4 will get a damage extending through the total thickness of the coating 4, an area of the outer surface 3 of the cladding tube 1 will be exposed to the water, water steam or the combination thereof, whereby this area will oxidate until a damage extending through the total thickness of the cladding tube 1 finally will be created. If the oxidation continues a damage extending through the total thickness of the liner layer 6 will finally be created. Thereby a damage extending through the total thickness of the coating 4, the cladding tube 1, the liner layer 6 and the coating 7, a so called primary damage, is formed. In such cases the water, water steam or the combination thereof will penetrate through the primary damage to an inner space 8 between the coating 7 and the fuel pellets 2. Thereby, the water, water steam or the combination thereof will fill the inner space 8 and attack the coating 7. These attacks may occur at long distances from the primary damage and be caused by hydration. Thanks to the coating 7 of the invention having a high resistance against hydration mostly no damages extending through the total thickness of the coating 7 are formed. The coating 7 and the combination of the coating 7 and the liner layer 6 thereby significantly reduces the risk of secondary damages being formed on the cladding tube 1 in comparison with uncoated cladding tubes. It also possible to exclude the liner layer 6 and still obtain a good protection against hydration at the inner surface 5 of the cladding tube 1.

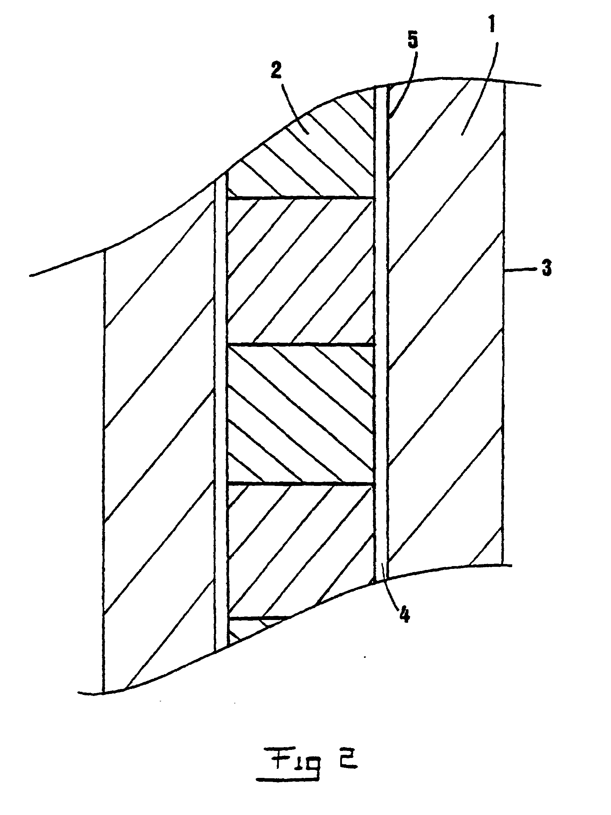

In Fig 2 a part of a cladding tube 1 according to prior art is shown, said tube being arranged in a light water reactor and nuclear fuel being arranged therein as fuel pellets. By use in a light water reactor an outer surface 3 of the cladding tube 1 is in contact with a primary cooling circuit comprising water, water steam or a combination thereof. Water, water steam or a combination thereof has an oxidating effect on the outer surface 3 of the cladding tube 1. The outer surface 3 of the cladding tube 1 is also subjected to wear from other components present in the light water reactor. The material of the cladding tube 1 has not a sufficient resistance against wear and oxidation to prevent the creation of damages by these attacks. When such a damage is well initiated on the outer surface 3 of the cladding tube 1, through the action of oxidation or wear, the oxidation progresses at the location of this damage. Finally, the result thereof is a damage extending through the total thickness of the cladding tube 1. By such a primary damage the nuclear fuel in the fuel pellets 2 may leak through the damage to the primary cooling circuit and thus spread radioactivity to said circuit. The damage extending through the total thickness of the cladding tube 1 also implies that the water, water steam or the combination thereof from the primary cooling circuit penetrates through the damage into the cladding tube to an inner space 4 located between the fuel pellets 2 and an inner surface 5 of the cladding tube 1. The water, water steam or the combination thereof is spread in the inner space 4 and has a hydrating effect on the inner surface 5 of the cladding tube 1. The material of the cladding tube 1 has not a sufficient resistance against this hydration, and damages will therefore be created on the inner surface 5 of the cladding tube 1. These damages may occur at long distances from the primary damage due to the fact that the water, water steam or the combination thereof causing the damage is spread over so large areas in the inner space 4. The damage created on the inner surface 5 of the cladding tube 1 then grows until, finally, a damage extending through the total thickness of the cladding tube is formed. The nuclear fuel from the fuel pellets 2 may leak out through such secondary damages and further spread radioactivity to the primary cooling circuit.

### EXAMPLE 1

An uncoated cladding tube for nuclear fuel with a liner layer provided on an inner surface of the cladding tube was subjected to a final annealing in order to produce a coating according to the invention on an inner surface onto the liner layer as well as an outer surface of the cladding tube. This final annealing was performed at atmospheric pressure by treating the cladding tube for 90 minutes at a temperature of 565°C under the action of a gas mixture comprising oxygen, argon and water steam. This treatment resulted in a coating of zirconium dioxide (ZrO₂) on an inner surface on the liner layer as well as on an outer surface of the cladding tube. This coating presented a good resistance against hydration, oxidation and wear.

### EXAMPLE 2

The final annealing was executed in the same way as in example 1 with the only exception that the gas mixture contained nitrogen instead of oxygen. The result thereof was a coating comprised by zirconium nitride (ZrN) on an inner surface, upon the liner layer, and on an outer surface of the cladding tube. This coating had a good resistance against hydration, oxidation and wear.

The thickness of the coating according to the invention may vary from at least 1 µm or at least 3 µm to at most 10 µm or at most 25 µm in order to obtain a good resistance against hydration, oxidation and wear.

Generally, the method comprises the provision of a coating of zirconium oxide or zirconium nitride on the inside of a cladding tube by subjecting said tube to an environment that comprises a controlled gas mixture that comprises metal organic compounds and also one or more other gases, such as oxygen gas, carbon dioxide, methane and/or nitrogen gas. By controlling the temperature, reaction amounts, pressure and gas content of said environment, an even coating which is very dense and resistant to hydration may be provided. The thickness thereof is preferably between 1 and 10 µm.

## Claims

1. A component (1) designed for use in a light water reactor and which at least partly is comprised by a metal and/or a metal alloy with at least one surface (3, 5) presenting a coating (4, 7) that comprises at least one of a nitride and an oxide compound, and has such a thickness that a hydration of the component (1) is substantially prevented, said component (1) comprising an inner space (8), the coating (7) being deposited at least onto a surface (5) in the inner space (8) of the component, and the component (1) being a cladding tube for nuclear fuel, **characterized in that** the coating (4, 7) has a thickness of more than 1 µm.

2. A component (1) according to claim 1, **characterized in that** the coating (4, 7) has a thickness of at most 25 µm.

3. A component (1) according to claim 1 or 2, **characterized in that** the coating (4, 7) has a thickness of at least 3 µm.

4. A component (1) according to any one of the preceding claims, **characterized in that** at least one of the surfaces (3, 5) of the component (1) is comprised by zirconium or a zirconium alloy, and that the coating (4, 7) comprises at least one of zirconium dioxide (ZrO₂) and zirconium nitride (ZrN).

5. A component (1) according to any one of the preceding claims, **characterized in that** the cladding tube (1) on the surface (5) of the inner space (8) presents a liner layer (6) and that the coating (7) is located onto this liner layer (6).

6. A component (1) according to any one of the preceding claims, **characterized in that** the coating (7) on the cladding tube (1) has such a high resistance against hydration that the risk of having secondary damages on the cladding tube (1) is substantially eliminated.

7. A method of producing a coating (4, 7), resistant to hydration, onto at least one surface of a component (1) designed for use in a light water reactor and at least partly comprised by a metal and/or a metal alloy by subjecting the component to a treatment with a gas mixture while heating the same, the treatment being performed generally at an atmospheric pressure and the gas mixture comprising water steam and at least one of oxygen, nitrogen, an active gas containing oxygen and an active gas containing nitrogen, wherein the component (1) is a cladding tube for nuclear fuel and comprises an inner space (8), wherein the coating (4, 7) is deposited onto a surface (5) in the inner space (8) of the component (1), **characterized in that** the coating is deposited such that it has a thickness of more than 1 µm.

8. A method according to claim 7, **characterized in that** the coating is produced by making at least one of oxygen, nitrogen, an active gas containing oxygen and an active gas containing nitrogen react with at least one material located in the surface of the component.

9. A method according to claim 7 or 8, **characterized in that** the coating is comprised by at least one of an oxide or a nitride of at least one material located in the surface of the component.

10. A method according to any of the claims 7 to 9, **characterized in that** the treatment is controlled by adding one or more gases that are inert in this context.

11. A method according to claim 10, **characterized in that** the inert gases comprise at least one of the noble gases argon, helium and neon.

12. A method according to any one of claims 7 to 11, **characterized in that** the treatment is controlled by varying the amount of water steam in the gas mixture.

13. A method according to any one of claims 7 to 12, **characterized in that** the gas mixture comprises at least 10 % water steam.

14. A method according to any one of claims 7 to 13, **characterized in that** the treatment is performed at such a temperature that an oxidation and a nitration respectively takes place, preferably at a temperature of at least 450° C and at most 650°C.

15. A method according to any one of claims 7 to 14, **characterized in that** the gas mixture contains air.

16. A method according to any one of claims 7 to 15, **characterized in that** the gas mixture comprises carbon dioxide (CO₂).

17. A method according to any one of claims 7 to 16, **characterized in that** the gas mixture comprises mixtures of carbon monoxide (CO) and carbon dioxide (CO₂).

18. A method according to any one of claims 7 to 14 and 16 to 17, **characterized in that** the gas mixture comprises dinitrogen oxide (N₂O).

19. A method according to any one of claims 7 to 18, **characterized in that** the treatment is performed for a period of 1 to 10 hours.

20. A method according to any one of claims 7 to 19, **characterized in that** the surface or the surfaces of the component treated comprises zirconium or a zirconium alloy.

21. A method according to any one of claims 7 to 21, **characterized in that** the coating formed on the surface or the surfaces of the component during the treatment comprises zirconium dioxide (ZrO₂) and/or zirconium nitride (ZrN).

22. A method according to any one of claims 7 to 21, **characterized in that** the cladding tube is annealed a plurality of times before the treatment, in order to confer mecanical strength, and that the treatment is a final annealing performed in the same plant as these annealings.

## Patentansprüche

1. Bauteil (1), welches zur Verwendung in einem Leichtwasserreaktor bestimmt ist und welches zumindest teilweise aus einem Metall und/oder einer Metallegierung mit mindestens einer Oberfläche (3,5) besteht, die einen Überzug (4,7) trägt, der mindestens eine Nitridverbindung oder eine Oxidverbindung enthält und der eine solche Dicke hat, daß eine Hydratation des Bauteils (1) im wesentlichen verhindert wird, wobei das Bauteil (1) einen Innenraum (8) hat, der Überzug (7) auf mindestens einer Oberfläche (5) des Innenraumes (8) des Bauteils aufgebracht ist und das Bauteil ein Hüllrohr für Kernbrennstoff ist, **dadurch gekennzeichnet, daß** der Überzug (4,7) eine Dicke von mehr als 1 µm hat.

2. Bauteil (1) nach Anspruch 1, **dadurch gekennzeichnet, daß** der Überzug (4,7) eine Dicke von höchstens 25 µm hat.

3. Bauteil (1) nach Anspruch 1 oder 2, **dadurch gekennzeichnet daß** der Überzug (4,7) eine Dicke von mindestens 3 µm hat.

4. Bauteil (1) nach einem der vorhergehenden Ansprüche, **dadurch gekennzeichnet, daß** mindestens eine der Oberflächen (3,5) des Bauteils (1) aus Zirkonium oder einer Zirkoniumlegierung besteht und daß der Überzug (4,7) mindestens eine der Verbindungen Zirkoniumdioxid (ZrO₂) und Zirkoniumnitrid (ZrN) enthält.

5. Bauteil (1) nach einem der vorhergehenden Ansprüche, **dadurch gekennzeichnet, daß** das Hüllrohr (1) auf der Oberfläche (5) des Innenraumes (8) mit einer Innenschicht (Liner) (6) versehen ist und daß der Überzug (7) auf dieser Innenschicht (6) aufgebracht ist.

6. Bauteil (1) nach einem der vorhergehenden Ansprüche, **dadurch gekennzeichnet, daß** der Überzug (7) auf dem Hüllrohr (1) einen so hohen Widerstand gegen Hydratation hat, daß die Gefahr von Sekundärschäden an dem Hüllrohr (1) im wesentlichen beseitigt ist.

7. Verfahren zur Herstellung eines gegen Hydratation resistenten Überzuges (4,7) auf mindestens einer Oberfläche eines Bauteils (1), welches zur Verwendung in einem Leichtwasserreaktor bestimmt ist und mindestens teilweise aus einem Metall und/oder einer Metallegierung besteht, indem das Bauteil einer Behandlung mit einem Gasgemisch ausgesetzt wird, wobei dasselbe erhitzt wird, die Behandlung im allgemeinen bei atmosphärischem Druck stattfindet und das Gasgemisch Wasserdampf und mindestens eines der Gase Sauerstoff, Stickstoff, ein aktives Gas, welches Sauerstoff enthält, und ein aktives Gas, welches Stickstoff enthält, wobei das Bauteil (1) ein Hüllrohr für Kernbrennstoff ist und einen Innenraum (8) hat und der Überzug (4,7) auf einer Oberfläche (5) des Innenraumes (8) des Bauteils aufgebracht ist, **dadurch gekennzeichnet, daß** der Überzug so aufgebracht wird, daß er eine Dicke vom mehr als 1 µm hat.

8. Verfahren nach Anspruch 7, **dadurch gekennzeichnet, daß** der Überzug in der Weise hergestellt wird, daß mindestens eines der Gase Sauerstoff, Stickstoff, aktives Sauerstoff enthaltendes Gas und aktives Stickstoff enthaltendes Gas zur Reaktion mit mindestens einem Material gebracht wird, welches in der Oberfläche des Bauteils vorhanden ist.

9. Verfahren nach Anspruch 7 oder 8, **dadurch gekennzeichnet, daß** der Überzug aus mindestens einem Oxid oder einem Nitrid mindestens eines Materials besteht, das in der Oberfläche des Bauteils vorhanden ist.

10. Verfahren nach einem der Ansprüche 7 bis 9, **dadurch gekennzeichnet, daß** die Behandlung dadurch gesteuert wird, daß ein oder mehrere Gase zugegeben wird/werden, das/die in diesem Zusammenhang inert ist/sind.

11. Verfahren nach Anspruch 10, **dadurch gekennzeichnet, daß** die inerten Gase mindestens eines der Edelgase Argon, Helium und Neon enthalten.

12. Verfahren nach einem der Ansprüche 7 bis 11, **dadurch gekennzeichnet, daß** die Behandlung durch Veränderung der Menge an wasserdampf in dem Gasgemisch gesteuert wird.

13. Verfahren nach einem der Ansprüche 7 bis 12, **dadurch gekennzeichnet, daß** das Gasgemisch mindestens 10% wasserdampf enthält.

14. Verfahren nach einem der Ansprüche 7 bis 13, **dadurch gekennzeichnet, daß** die Behandlung bei einer solchen Temperatur durchgeführt wird, daß eine Oxidation beziehungsweise eine Nitrierung stattfindet, vorzugsweise bei einer Temperatur von mindestens 400°C und höchstens 650°C.

15. Verfahren nach einem der Ansprüche 7 bis 14, **dadurch gekennzeichnet, daß** das Gasgemisch Luft enthält.

16. Verfahren nach einem der Ansprüche 7 bis 15, **dadurch gekennzeichnet, daß** das Gasgemisch Kohlendioxid (CO₂) enthält.

17. Verfahren nach einem der Ansprüche 7 bis 16, **dadurch gekennzeichnet, daß** das Gasgemisch Gemische aus Kohlenmonoxid (CO) und Kohlendioxid (CO₂) enthält.

18. Verfahren nach einem der Ansprüche 7 bis 14 und 16 bis 17, **dadurch gekennzeichnet, daß** das Gasgemisch Distickstoffoxid (N₂O) enthält.

19. Verfahren nach einem der Ansprüche 7 bis 18, **dadurch gekennzeichnet, daß** die Behandlung über einen Zeitraum von 1 bis 10 Stunden stattfindet.

20. Verfahren nach einem der Ansprüche 7 bis 19, **dadurch gekennzeichnet, daß** die Oberfläche oder die Oberflächen des behandelten Bauteils Zirkonium oder eine Zirkoniumlegierung enthalten.

21. Verfahren nach einem der Ansprüche 7 bis 21, **dadurch gekennzeichnet, daß** der während der Behandlung auf der Oberfläche oder den Oberflächen des Bauteils aufgebrachte Überzug Zirkoniumdioxid (ZrO₂) und/oder Zirkoniumnitrid (ZrN) enthält.

22. Verfahren nach einem der Ansprüche 7 bis 21, **dadurch gekennzeichnet, daß** das Hüllrohr vor der Behandlung mehrere Male geglüht (annealed) wird, um ihm mechanische Festigkeit zu verleihen, und daß die Behandlung ein abschließendes Glühen ist, welches in derselben Anlage wie diese Glühvorgänge stattfindet.

## Revendications

1. Composant (1) conçu pour une utilisation dans un réacteur à eau légère et qui au moins partiellement est constitué d'un métal et / ou d'un alliage de métal avec au moins une surface (3, 5) présentant un revêtement (4, 7) qui comprend au moins l'un d'un composé d'un nitrure et d'un oxyde, et qui a une telle épaisseur qu'une hydratation du composant (1) est sensiblement empêchée, ledit composant (1) comprenant un espace interne (8), le revêtement (7) étant déposé au moins sur une surface (5) dans l'espace interne (8) du composant, et le composant (1) étant un tube de gainage pour carburant nucléaire, **caractérisé en ce que** le revêtement (4, 7) a une épaisseur supérieure à 1 µm.

2. Composant (1) selon la revendication 1, **caractérisé en ce que** le revêtement (4, 7) a une épaisseur d'au plus 25 µm.

3. Composant (1) selon la revendication 1 ou 2, **caractérisé en ce que** le revêtement (4, 7) a une épaisseur d'au moins 3 µm.

4. Composant (1) selon l'une quelconque des revendications précédentes, **caractérisé en ce que** au moins une des surfaces (3, 5) du composant (1) est constituée de zirconium ou d'un alliage de zirconium, et **en ce que** le revêtement (4, 7) comprend au moins l'un parmi le dioxyde de zirconium (ZrO₂) et le nitrure de zirconium (ZrN).

5. Composant (1) selon l'une quelconque des revendications précédentes, **caractérisé en ce que** le tube de gainage (1) sur la surface (5) de l'espace interne (8) présente une couche de doublure (6) et **en ce que** le revêtement (7) est situé sur cette couche de doublure (6).

6. Composant (1) selon l'une quelconque des revendications précédentes, **caractérisé en ce que** le revêtement (7) sur le tube de gainage (1) a une résistance tellement élevée contre l'hydratation que le risque d'avoir des dommages secondaires sur le tube de gainage (1) est sensiblement éliminé.

7. Procédé de production d'un revêtement (4, 7) résistant à l'hydratation, sur au moins une surface d'un composant (1) conçu pour une utilisation dans un réacteur à eau légère et qui au moins partiellement est constitué d'un métal et / ou d'un alliage de métal en soumettant le composant à un traitement avec un mélange gazeux tout en chauffant celui-ci, le traitement étant effectué généralement à une pression atmosphérique et le mélange gazeux comprenant de la vapeur d'eau et au moins un élément parmi l'oxygène, l'azote, un gaz actif contenant de l'oxygène et un gaz actif contenant de l'azote, dans lequel le composant (1) est un tube de gainage pour carburant nucléaire et comprend un espace interne (8), dans lequel le revêtement (4, 7) est déposé sur une surface (5) dans un espace interne (8) du composant (1), **caractérisé en ce que** le revêtement est déposé de manière à ce qu'il ait une épaisseur supérieure à 1 µm.

8. Procédé selon la revendication 7, **caractérisé en ce que** le revêtement est produit en faisant réagir au moins un élément parmi l'oxygène, l'azote, un gaz actif contenant de l'oxygène et un gaz actif contenant de l'azote avec au moins un matériau situé dans la surface du composant.

9. Procédé selon la revendication 7 ou 8, **caractérisé en ce que** le revêtement est constitué par au moins un élément parmi un oxyde ou un nitrure d'au moins un matériau situé dans la surface du composant.

10. Procédé selon l'une quelconque des revendications 7 à 9, **caractérisé en ce que** le traitement est contrôlé en ajoutant un ou plusieurs gaz qui sont inertes dans ce contexte.

11. Procédé selon la revendication 10, **caractérisé en ce que** les gaz inertes comprennent au moins un élément parmi les gaz nobles argon, hélium et néon.

12. Procédé selon l'une quelconque des revendications 7 à 11, **caractérisé en ce que** le traitement est contrôlé en modifiant la quantité de vapeur d'eau dans le mélange de gaz.

13. Procédé selon l'une quelconque des revendications 7 à 12, **caractérisé en ce que** le mélange de gaz comprend au moins 10 % de vapeur d'eau.

14. Procédé selon l'une quelconque des revendications 7 à 13, **caractérisé en ce que** le traitement est effectué à une température telle qu'une oxydation et une nitration se produisent respectivement, de préférence à une température d'au moins 450 °C et d'au plus 650 °C.

15. Procédé selon l'une quelconque des revendications 7 à 14, **caractérisé en ce que** le mélange gazeux contient de l'air.

16. Procédé selon l'une quelconque des revendications 7 à 15, **caractérisé en ce que** le mélange gazeux comprend du dioxyde de carbone (CO₂).

17. Procédé selon l'une quelconque des revendications 7 à 16, **caractérisé en ce que** le mélange gazeux comprend des mélanges de monoxyde de carbone (CO) et de dioxyde de carbone (CO₂).

18. Procédé selon l'une quelconque des revendications 7 à 14 et 16 à 17, **caractérisé en ce que** le mélange gazeux comprend de l'oxyde de diazote (N₂O).

19. Procédé selon l'une quelconque des revendications 7 à 18, **caractérisé en ce que** le traitement est effectué pendant une durée de 1 à 10 heures.

20. Procédé selon l'une quelconque des revendications 7 à 19, **caractérisé en ce que** la surface ou les surfaces du composant traité comprend du zirconium ou un alliage de zirconium.

21. Procédé selon l'une quelconque des revendications 7 à 21, **caractérisé en ce que** le revêtement formé sur la surface ou les surfaces du composant pendant le traitement comprend du dioxyde de zirconium (ZrO₂) et / ou du nitrure de zirconium (ZrN).

22. Procédé selon l'une quelconque des revendications 7 à 21, **caractérisé en ce que** le tube de gainage est recuit une pluralité de fois avant le traitement, afin de lui conférer une résistance mécanique, et **en ce que** le traitement est un recuit final effectué dans la même unité que ces recuits.
